# EUROPEAN PATENT APPLICATION

(11) **EP 4 776 702 A1**
(43) Date of publication of application: **15.07.2026**
(21) Application number: 25203364.2
(22) Date of filing: 19.09.2025
(51) Int. Cl.: H04W 52/02, H04W 76/28, H04W 88/06

(54) **TRANSCEIVER IN WIRELESS COMMUNICATION SYSTEM, USER TERMINAL INCLUDING TRANSCEIVER, AND METHOD OF OPERATING TRANSCEIVER**

(30) Priority: 08.01.2025 KR 20250003036
(71) Applicant: Samsung Electronics Co., Ltd., Suwon-si, Gyeonggi-do 16677 (KR)
(72) Inventor: CHONG, Dahae, 16677 Suwon-si (KR); PARK, Jin Woong, 16677 Suwon-si (KR); OH, Jinwoo, 16677 Suwon-si (KR); KIM, Beom Kon, 16677 Suwon-si (KR); DO, Joohyun, 16677 Suwon-si (KR); SHIM, Myungjoon, 16677 Suwon-si (KR); SIM, Yujin, 16677 Suwon-si (KR)
(74) Representative: Marks & Clerk LLP

(57) **Abstract**

A transceiver is provided. The transceiver includes: a radio frequency integrated circuit (RFIC) configured to transmit and receive a signal; a main radio (MR) receiver configured to obtain a digital signal from the RFIC; and a processor configured to: control the RFIC and the MR receiver; identify information about an event for switching to a low power radio (LR) receiving mode; identify whether the event is triggered based on the information about the event; and based on the event being triggered, process a low power signal using an LR receiving circuit.

## Description

### BACKGROUND

### 1. Field

The present disclosure relates to a transceiver of a wireless communication system, a user terminal including the transceiver, and a method of operating the transceiver.

### 2. Description of Related Art

A wireless communication system supports various services and applications through data transmission and reception between a user terminal and a base station. In a communication system, power consumption of a user terminal is one of the factors that considerably affects user experience and efficiency of a device. In particular, as use of a mobile device such as a smartphone, a tablet, and an IoT device increases, reduction of power consumption is becoming a more and more important challenge.

For this, various technologies and methods are being adopted to reduce power consumption of a user terminal. For instance, a technology such as discontinuous reception (DRX) to reduce power consumption in an inactive mode of a terminal, and a channel optimizing and transmission scheduling technology for increasing efficiency in data transmission and reception are being utilized.

With the utilization of the technologies thereof, importance of a method of configuring and controlling a transceiver for reducing power consumption in a receiver of a terminal is increasing.

### SUMMARY

One or more example embodiments provide a transceiver that reduces power consumption of a wireless communication system, a method of operating a transceiver that reduces power consumption, and a user terminal including a transceiver. In particular, one or more example embodiments provide a transceiver which may receive a low power signal with a high power efficiency.

One or more example embodiments also provide a method of controlling a transceiver and a terminal including a transceiver.

The technical goals aimed by example embodiments of the present disclosure are not limited to the technical goals as described above, and other technical goals may be derived from the following example embodiments.

According to an aspect of an embodiment, a transceiver for a wireless communication system, includes: a radio frequency integrated circuit (RFIC) configured to transmit and receive a signal; a main radio (MR) receiver configured to obtain a digital signal from the RFIC; and a processor configured to: control the RFIC and the MR receiver; identify information about an event for switching to a low power radio (LR) receiving mode; identify whether the event is triggered based on the information about the event; and based on the event being triggered, process a low power signal using an LR receiving circuit.

According to another aspect of an embodiment, a method of operating a transceiver including an RFIC and an MR receiver for a wireless communication system, includes: identifying information about an event for switching to an low power radio (LR) receiving mode; identifying whether the event is triggered based on the information about the event; and based on the event being triggered, processing a low power signal using an LR receiving circuit.

According to another aspect of an embodiment, a user terminal for a wireless communication system, includes: a transceiver including an RFIC and an MR receiver; and at least one processor configured to control operations of the transceiver. The at least one processor is configured to: identify information about an event for switching to a low power radio (LR) receiving mode; identify (e.g. determine) whether the event is triggered based on the information about the event; and based on the event being triggered (e.g. in the case that the event is triggered), receive a low power signal using an LR receiving circuit (e.g. an LR receiving module).

A low power radio receiving mode may operate at a lower power (e.g. lower energy consumption) than a main radio receiving mode of the main radio receiver. A low power radio receiving mode may be a mode for receiving a low power signal. A low power signal may be a signal received during (e.g. compatible with) the lower power radio receiving mode. For instance, a low power signal may be a low power wake-up signal (LP WUS) and/or a low power synchronization signal (LP SS). A low power signal may be low power in that it is configured to be received and processed by a low power radio receiving module (e.g. more efficiently and/or at lower power consumption than a main radio receiver). The low power radio receiving module and the low power signal may comply with the 3^{rd} Generation Partnership Project (3GPP) Release 18 (e.g. 3GPP TS 38.869 v18) and/or 3GPP Release 19 (e.g. 3GPP TS 38.211 v19 and/or 3GPP 38.213 v19).

At least some of the above and other features of the invention are set out in the claims.

Specific details of other example embodiments are included in detailed descriptions and drawings.

### BRIEF DESCRIPTION OF DRAWINGS

These and/or other aspects, features, and advantages will be more apparent from the following description of example embodiments, taken in conjunction with the accompanying drawings, in which:
FIG. 1 is a block diagram illustrating a transceiver according to an example embodiment;
FIG. 2 is a block diagram illustrating a low power radio (LR) receiving module implemented in radio frequency integrated circuit (RFIC) chip according to an example embodiment;
FIG. 3 shows a block diagram illustrating an implementation of an LR receiving module using part of a function of a main radio (MR) receiver according to an example embodiment;
FIG. 4 is a flowchart illustrating a method of switching to an LR receiving mode according to an example embodiment;
FIG. 5 is a flowchart illustrating a method of receiving a low power signal using an LR receiving module by obtaining information related to low power switching according to an example embodiment;
FIG. 6 is a graph illustrating a process in which a transceiver according to an example embodiment receives a signal and receives a low power signal using an LR receiving module according to a discontinuous reception (DRX) cycle in a chronological sequence;
FIG. 7 is a flowchart illustrating a method of receiving a low power signal using an LR receiving module based on a DRX timer according to an example embodiment;
FIG. 8 is a flowchart illustrating a method of receiving a low power signal using an LR receiving module based on a signal quality according to an example embodiment; and
FIG. 9 is a block diagram illustrating a user terminal according to an example embodiment.

### DETAILED DESCRIPTION

Hereinafter, example embodiments are described in detail with reference to the accompanying drawings. Terms used herein are selected from currently widely used general terms when possible while considering the functions in the present disclosure. However, the terms may vary depending on the intention or precedent of a person skilled in the art, the emergence of new technology, and the like. Further, in certain cases, there are also terms arbitrarily selected by the applicant, and in the cases, the meaning will be described in detail in the corresponding descriptions. Therefore, the terms used in the present disclosure should be defined based on the meaning of the terms and the contents of the present disclosure, rather than the simple names of the terms.

Throughout the specification, when a part is described as "comprising" or "including" a component, it does not exclude another component but may further include another component unless otherwise stated. Furthermore, terms such as "... unit," "... group," and "... module" described in the specification mean a unit that processes at least one function or operation, which may be implemented as hardware, hardware executing software, or a combination thereof.

Expression "at least one of a, b and c" described throughout the specification may include "a alone," "b alone," "c alone," "a and b," "a and c," "b and c" or "all of a, b and c."

A "terminal" may be implemented as, for example, a computer or a portable terminal capable of accessing a server or another terminal through a network. Here, the computer may include, for example, a notebook, a desktop computer, and/or a laptop computer which are equipped with a web browser. The portable terminal may be a wireless communication device ensuring portability and mobility, and include (but is not limited to) any type of handheld wireless communication device, for example, a tablet personal computer (PC), a smartphone, a communication-based terminal such as international mobile telecommunication (IMT), code division multiple access (CDMA), W-code division multiple access (W-CDMA), long term evolution (LTE), or the like.

A low power wake-up signal (LP WUS) and a low power synchronization signal (LP SS), which are low power signals, may be used to reduce power consumption during idling and operating of a user terminal. The low power signals may be used to reduce power consumption and provide an efficient signal receiving structure.

The low power signals may be transmitted in various forms. For instance, the low power signals may be designed based on on-off keying (OOK). In the method, a 1-bit signal may be transmitted through a new radio (NR) subcarrier by utilizing orthogonal frequency division multiplexing (OFDM) of an existing NR, a "1" signal may transmit data by quadrature phase shift keying (QPSK) modulation, and a "0" signal may generate a zero-power subcarrier, in order for the signals to be distinguished.

The LP WUS may be designed as a guard resource block (RB) based on adjacent channel selectivity (ACS) and adjacent subcarrier selectivity (ASCS). For instance, by applying 5th Butterworth filtering to a 5 MHz wake-up signal (WUS) bandwidth, a 30 kHz subcarrier spacing (SCS) may be designed as 1 RB, and a 15 kHz SCS as a guard RB of 1 RB.

Here, the LP WUS may be designed as a signal that performs a role of efficiently notifying a paging signal. The LP WUS may be a wake up signal for indicating when to switch out of low power radio receiving mode. In an NR system, a user terminal is required to receive a physical downlink control channel (PDCCH) at each paging occasion, and determine paging therethrough. The method requires the user terminal to continuously maintain RF reception to detect paging, which may cause a large amount of power consumption. In contrast, a user terminal that supports the LP WUS may identify paging only by receiving an LP WUS, which is a low power signal, without having to monitor the PDCCH to identify paging. Accordingly, the LP WUS may reduce unnecessary power consumption in an idle mode of the user terminal, and contribute to extending battery usage time of the user terminal.

The LP SS may be designed as a signal that may replace a synchronization signal block (SSB) which is used for synchronizing and radio resource management (RRM) measuring in the NR. The LP SS may be a synchronization signal for the lower power radio receiving mode. The LP SS may be used for the user terminal to maintain synchronization with a network, and provide information required for cell searching and supporting mobility. In particular, the LP SS provides a high power efficiency compared to the SSB, so as to effectively reduce energy consumed in RRM measuring and synchronizing processes of the user terminal.

Accordingly, apart from a main radio (MR) configured to receive NR signals, there is a need for a low power radio (LR) specialized in receiving signals of the LP WUS and the LP SS. The LR is designed to reduce power required in idling and synchronizing processes of the user terminal, and, by a reception-exclusive structure of the LP WUS and LP SS, energy may be efficiently used. In particular, the signal reception configuration is useful in an Internet of Things (IoT) device which uses a limited battery and in which a low power operation is important, or a user terminal which is used in an environment in which power consumption is limited. Notwithstanding, without being limited thereto, the signal reception configuration is provided in terminals in general which receive a wireless signal, thereby improving power efficiency.

One or more example embodiments provide a method in which a transceiver of a user terminal, in case a predetermined LP mode trigger condition is satisfied in an LP that receives a low power signal, operates in an LR receiving mode for receiving a low power signal using a low power receiver from an MR receiving mode for receiving a normal signal.

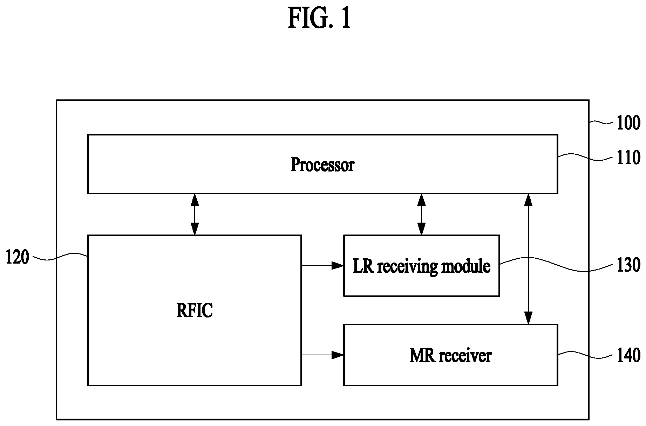

FIG. 1 is a block diagram illustrating a transceiver according to an example embodiment.

Referring to FIG. 1, a transceiver 100 according to an example embodiment includes a processor 110, a radio frequency integrated circuit (RFIC) 120, an LR receiving module (i.e., LR receiving circuit) 130 and an MR receiver (i.e., MR receiving circuit) 140. However, a configuration included in the transceiver 100 of FIG. 1 is provided as an example, and other configurations may be further included in the transceiver 100. For instance, the transceiver 100 may further include elements such as a radio frequency (RF) frontend, a baseband processor, an analog to digital converter (ADC), a digital to analog converter (DAC), and a phase locked loop (PLL). The same is not limited thereto. An LR receiving module may be a low power wake-up radio (e.g. according to 3GPP, such as 3GPP Release 18 (e.g. 3GPP TS 38.869 v18) and/or 3GPP Release 19 (e.g. 3GPP TS 38.211 v19 and/or 3GPP 38.213 v19)).

In an example embodiment, the transceiver 100 may perform transmission and reception of a signal of a user terminal of a wireless communication system. The transceiver 100 may receive a wireless signal, process or demodulate the received signal, and output data switched to a digital signal. Further, the transceiver 100 may modulate a transmission signal or switch the transmission signal to a wireless signal by frequency conversion to transmit the wireless signal.

The transceiver 100 according to an example embodiment may be referred to as a modem, and may support various wireless communication standards such as LTE, 5G or Wi-Fi. Further, the transceiver 100 may be used in various mobile communication devices and IoT devices. In an example embodiment, the transceiver 100 may include the processor 110, the LR receiving module 130 and the MR receiver 140, and in that case, the RFIC 120 may be implemented as a device separate from the transceiver 100 or the modem.

The processor 110 according to an example embodiment may be configured to control an operation of the RFIC 120, the LR receiving module 130 and the MR receiver 140 included in the transceiver 100, and may provide information for controlling an operation of each element. For instance, the processor 110 may, depending on whether an LR receiving mode is triggered, control for switching to the LR receiving mode after providing information for converting (or switching) to the LR receiving mode for receiving a low power signal using the LR receiving module 130 in an MR receiving mode operated by the MR receiver 140 to each element. Further, the processor 110 may include at least one sub-processor.

In an example embodiment, the MR receiver 140 may include a processor which processes a baseband signal. As an example, the MR receiver 140 may perform modulation and demodulation based on information received from the RFIC 120, process channel coding and decoding, and process channel equalization, and may manage a protocol stack related to a physical (PHY) layer, a media access control (MAC) layer, and a radio link control (RLC) and packet data convergence protocol (PDCP) layer. Further, the MR receiver 140 may obtain information from a signal received by an interaction of the processor 110 and the RFIC 120.

For instance, during the time in which a user terminal operates in the MR receiving mode, the processor 110 may obtain information about an event of the LR receiving mode from at least one of the RFIC 120 or the MR receiver 140, and may determine whether the event is triggered based on the information about the event. When it is identified that the event is triggered, the processor 110 may control at least one of the RFIC 120, the LR receiving module 130 and the MR receiver 140 in order for the user terminal to operate in the LR receiving mode. Here, the information about the event may include at least one of information indicating entry time of a discontinuous reception (DRX) mode or information indicating a signal quality measurement value. In addition, the information about the event may include overall information by which the user terminal may receive a signal designed in relation to a low power operation and the user terminal may determine whether to switch a receiving mode for an actual low power operation accordingly.

The processor 110 according to one example embodiment may determine (or decide) that an event is triggered when a signal quality measurement value is equal to or greater than a predetermined value. In this regard, when the signal quality measurement value is equal to or greater than the predetermined value, the processor 110 may control each of configurations in order for a user terminal to operate by switching to the LR receiving mode. For example, the predetermined value may indicate a minimum level to be able to operate in the LR receiving mode using the LR receiving module 130.

The processor 110 according to an example embodiment may, when an event is triggered to switch to the LR receiving mode, transmit first control information to the LR receiving module 130 for an operation of the LR receiving mode. In that case, the LR receiving module 130 may receive the first control information and may operate to receive a low power signal for the operation of the LR receiving mode.

The processor 110 according to an example embodiment may transmit second control information to deactivate the MR receiver 140 to the MR receiver 140. In that case, a function of the MR receiver 140 may be deactivated, and the MR receiver 140 may operate with only a minimum amount of power which is required (e.g. substantially required). For example, the power required to operate in the LR receiving mode may be less (e.g. substantially less) than the power required to operate in the MR receiving mode. Accordingly, in case of operating in the LR receiving mode, power consumption of the MR receiver 140 may be reduced.

Here, a target signal to obtain a signal quality measurement value may include at least one signal of an LP SS, a new radio primary synchronization signal (NR PSS) or a new radio secondary synchronization signal (NR SSS) received using the RFIC 120 or the MR receiver 140 in the MR receiving mode, and may determine whether an event is triggered to switch a receiving mode based on a measured value corresponding to a quality of the target signal. Further, a signal quality measurement index may be at least one of reference signal received power (RSRP), reference signal received quality (RSRQ), signal to interference plus noise ratio (SINR), a correlation value and a gain index value of the LP SS, the NR PSS or the NR SSS.

Here, the NR PSS may be a basic synchronization signal used by a user terminal to perform initial synchronization with a base station, and perform a role according to which the user terminal matches timing with the base station. Further, the NR SSS may be used along with the NR PSS, and may assist frequency synchronization and frame synchronization, and provide additional information such as a cell ID to assist in cell searching and selecting.

The RSRP may be a power average value of a received signal, and an index for showing a signal strength. The RSRP may be used for comparing power between cells and evaluating network connection quality. The RSRQ may show a quality of a received signal, and show an index which is calculated based on the RSRP and a received signal strength indicator (RSSI) to be in consideration of both a signal strength and interference and noise.

The SINR may be an index for evaluating validity and reliability of a signal, and indicate a ratio of interference and noise with respect to a received signal to show stability of the signal, and a correlation value may show a correlation coefficient of a received signal. The SINR may be used to evaluate a synchronization state between a network and a user terminal by analyzing accuracy and timing of a synchronization signal.

A gain index may show an amplified degree of a received signal, and may be a value that quantitatively shows gain generated during a signal amplification process in an RF circuit. The gain index may be an index that shows information required for signal processing and power adjustment.

The processor 110 according to an example embodiment may determine whether an event is triggered based on entry time of the DRX mode. For instance, the processor 110 may determine whether a predetermined period of time has elapsed from entry time of the DRX mode, and, when the predetermined period of time has elapsed from the entry time of the DRX mode, determine that an event is triggered.

Here, the DRX mode may signify providing a function with which a user terminal cyclically stops signal reception to reduce power consumption, and the predetermined period of time may be defined as time required for the DRX mode to reach a stable state. When the predetermined period of time has elapsed from the entry time of the DRX mode, the user terminal may determine to operate in an LR receiving mode for additional power reduction.

According to an example embodiment, a timer for entering an LR receiving mode may be set by the processor 110 by providing a timer value to the transceiver 100 in a network. In that case, when a timer value provided from entry time of the DRX mode is reached, the processor 110 may instruct to switch to and operate in an LR receiving mode.

During the DRX mode, detection of information that starts or restarts a drx-InactivityTimer (e.g., downlink control information (DCI) on a PDCCH) or payload reception/transmission causes the processor to pause or reset the DRX timer and maintain the MR receiving mode until the threshold time elapses with no control information or payload activity detected. For reference, the drx-InactivityTimer is specified in 3GPP TS 38.321 v18 (NR MAC) and 3GPP TS 36.321 v18 (LTE MAC); configuration is performed at RRC (e.g., 3GPP TS 38.331 v18 (NR RRC) and 3GPP TS 36.331 v8 (LTE RRC)).

According to an example embodiment, the timer for entering the LR receiving mode may be set after the processor 110 independently uses a value defined at a standard. In that case, the processor 110 may, when a predetermined time value is reached from entry time of the DRX mode, instruct to switch to and operate in the LR receiving mode.

According to an example embodiment, the RFIC 120 is an integrated circuit for processing a high-frequency signal of a wireless communication system, and may perform major functions of a transmitter and a receiver. Further, the RFIC 120 may be a singular chip that implements major functions of a transmitter and a receiver. The RFIC 120 may perform various wireless signal processing functions such as frequency conversion, amplification, filtering, modulation and demodulation, and may perform a function of transmitting and receiving a signal according to various wireless communication standards by the functions thereof. With regard to a transmitter, the RFIC 120 switches a baseband signal to a high-frequency signal before transmitting the high-frequency signal through an antenna, and, with regard to a function of a receiver, the RFIC 120 may switch a high-frequency signal received from the antenna to a baseband signal. For this, the RFIC 120 may include a mixer, amplifier, filter and oscillator circuit, and may include a digital control circuit to precisely control and adjust an RF signal.

According to an example embodiment, the RFIC 120 may be implemented as an RFIC chip in a form of an independent chip, and may be used in a form such as a Wi-Fi chip and an LTE/5G RF frontend module. Furthermore, the RFIC 120 may be provided in a form of a module by being integrated with another element (for example, an antenna switch and a filter), or may be implemented in a form of a system-on-chip (SoC) integrated with a digital signal processing circuit.

Further, the RFIC 120 may include the LR receiving module 130 which may operate using a partial function. In that case, the LR receiving module 130 may be implemented within the RFIC 120 of the transmitter 100. In that case, the LR receiving module 130 may be implemented in the RFIC 120, but without being limited thereto, the LR receiving module 130 operating according to control of the RFIC 120 may be additionally provided.

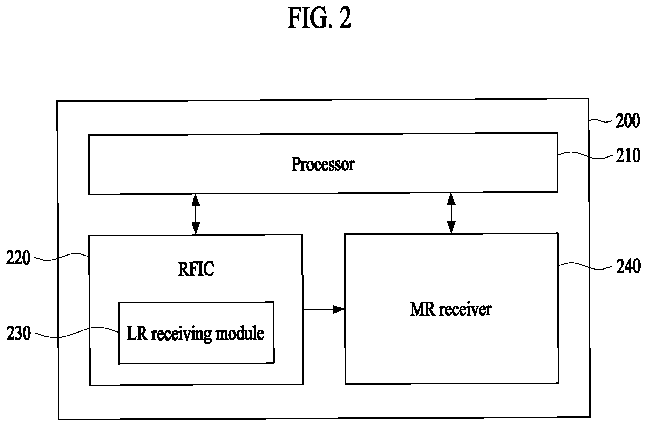

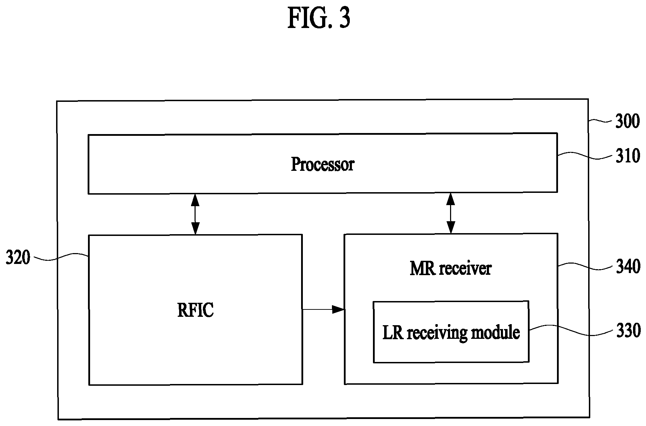

According to an example embodiment, the LR receiving module 130 may perform an operation to receive a low power signal. FIG. 1 illustrates the LR receiving module 130 being implemented as a device separate from the RFIC 120 and the MR receiver 140 in order to show a function of the LR receiving module 130 by conceptually separating the same, but the LR receiving module 130 may be a single module, and may be implemented using an inner module or a function of the RFIC 120 or the MR receiver 140. In this regard, the LR receiving module 130 may be included in the RFIC 120 or the MR receiver 140. Detailed description regarding thereto will be described in detail by referring to FIG. 2 and FIG. 3.

According to an example embodiment, the LR receiving module 130 may obtain a signal processed from the RFIC 120, and may exchange information with the processor 110. Further, the LR receiving module 130 may monitor an LP WUS in an LR receiving mode for receiving a low power signal, and, when the LP WUS is monitored, may notify the processor 110 that the LP WUS is received. In that case, the processor 110 may control the MR receiver 140 to receive a signal to switch to the MR receiving mode. In that case, the processor may terminate an operation of the LR receiving module 130, and may identify paging based on a received signal. In an example embodiment, a point of time at which the MR receiver 140 operates, and a point of time at which an operation of the LR receiving module 130 ends may be variously set according to a method of controlling.

According to an example embodiment, the RFIC 120 may process an obtained low power signal into a digital signal by an ADC, and the LR receiving module 130 may obtain the digital signal processed by the RFIC 120 to perform digital signal processing based on the obtained signal. The LR receiving module 130 may be designed to perform calculation required for detection of the LP WUS and basic signal quality analysis. For instance, the LR receiving module 130 may calculate and detect a correlation value of the LP WUS, perform a frequency and timing synchronization process based on an LP SS, or perform only calculation required for analysis of basic signal quality such as RSRP, RSRQ or SINR of each signal. The transceiver 100 may maintain an idle mode for a period of time (e.g. for a long period of time) during a DRX cycle.

In an example embodiment, the MR receiver 140 may process a digital signal provided from the RFIC 120 to extract valid data. The RFIC 120 may switch a high-frequency signal received by an antenna to a low-frequency (baseband) signal before switching the a low-frequency signal to a digital signal, and the MR receiver 140 may receive the digitized signal to be in charge of following processing.

The MR receiver 140 may perform channel decoding, data depacking, and frequency and timing synchronization processes based on the digital signal obtained from the RFIC 120. The MR receiver 140 may correct an error in the digital signal, restore original data, and perform synchronization of the digital signal. Further, the MR receiver 140 may feed back signal quality information generated during a receiving process to the RFIC 120 or the processor 110 to support optimization of a network operation.

According to an example embodiment, when the processor 110 determines that an event is triggered and determines that the transceiver 100 operates in the LR receiving mode, the MR receiver 140 may have an operation of the MR receiver 140 deactivated. In this regard, when operating in the LR receiving mode, because a low power signal may be received with the LR receiving module 130, the operation of the MR receiver 140 may be deactivated for an operation with a minimal standby power, thereby reducing power consumption.

According to an example embodiment, when the processor 110 receives an LP WUS and determines that the transceiver 100 operates by switching from the LR receiving mode to the MR receiving mode, the MR receiver 140 may resume the operation (i.e., the previously deactivated operation) to receive a signal. Further, the MR receiver 140 may identify the signal to identify paging.

In this regard, the MR receiver 140 may be designed for high-speed data processing, and may support various high-speed network environments such as LTE, 5G NR, and Wi-Fi. The MR receiver 140 may be linked with the DRX mode to contribute to reducing power consumption of the transceiver 100, and may be activated if necessary to ensure high-speed data transmission and reliability in a network. In particular, the MR receiver 140 may switch to the MR receiving mode by interacting with the LR receiving module 130, and may detect and process a network signal such as a paging signal.

In an example embodiment, the transceiver 100 may perform a handover operation using the LR receiving module 130 in the LR receiving mode. The LR receiving module 130 may receive an NR PSS or an NR SSS from a first base station of a neighbor cell, and the processor 110 may report RRM based on the NR PSS or the SSS to a second base station of a serving cell, in order to perform handover to the neighbor cell. Accordingly, the transceiver 100 may use the LR receiving module 130 that operates in a low power mode to perform handover from the serving cell to the neighbor cell, thereby reducing power consumption even while performing handover.

Situations may exist in which a base station of the serving cell does not support an LR signal. In those situations, the transceiver 100 may receive information regarding whether the LR signal is supported from the base station, and may determine that the LR signal is not supported accordingly. The transceiver 100 may, when it is determined that the base station of the serving cell does not support the LR signal, still operate in the MR receiving mode even when determined is that an event is triggered. In this regard, even when the event is triggered, when it is determined that the base station of the serving cell does not support the LR signal, the processor 110 may continue to receive a signal using the MR receiver 140, and may not receive a signal using the LR receiving module 130. In this regard, the operation of the MR receiver 140 may not be deactivated when it is determined that the base station of the service cell does not support the LR signal.

In an example embodiment, when the processor 110 determines that the base station of the serving cell does not support the LR signal, the processor 110 may determine an LR signal reception cycle as a signal cycle longer than a signal cycle of the serving cell supporting the LR signal, so as to switch to the LR receiving mode.

In an example embodiment, even when the processor 110 monitors an LP WUS, the processor 110 may determine that the user terminal belongs to a serving cell that does not support an LP SS. In that case, the processor 110 may measure a signal quality of an NR PSS or an NR SSS instead of a signal quality of an LP SS, for switching to the LR receiving mode from the MR receiving mode based on whether the measured NR PSS or NR SSS is equal to or greater than a predetermined threshold value.

According to an example embodiment, the processor 110 may control transmission of a signal for controlling each element to the RFIC 120, the LR receiving module 130 and the MR receiver 140, and the LR receiving module 130 and the MR receiver 140 may report information related to an operation of each element to the processor 110. For example, the processor 110 may be reported with (e.g. may receive) information about an event from the RFIC 120 or the MR receiver 140 to determine whether the event is triggered, and, when determined is that the event is triggered, the processor 110 may control transmission of first control information to the LR receiving module 130 for an operation of the LR receiving mode and transmit second control information to deactivate the MR receiver 140 to the MR receiver 140.

FIG. 2 is a block diagram illustrating a structure in which an LR receiving module is implemented in an RFIC chip according to an example embodiment. When an element described in FIG. 1 is implemented or operates with an identical or similar operation also in FIG. 2, duplicate description is not provided in detail. An element of FIG. 2 may perform an operation corresponding to an element described in FIG. 1, but a specific implementation method or reproduction method thereof may be performed to be adequate to a configuration of FIG. 2.

Referring to FIG. 2, a transceiver 200 according to an example embodiment includes a processor 210, an RFIC 220 and an MR receiver (i.e., MR receiving circuit) 240. However, a configuration included in the transceiver 200 of FIG. 2 is provided as an example, and the transceiver 200 may further include another configuration. For instance, the transceiver 200 may further include an element such as an RF frontend, a baseband processor, an ADC/DAC, and a PLL. The same is not limited thereto.

In an example embodiment, an LR receiving module 230 (i.e., LR receiving circuit) may be implemented within the RFIC 220. For instance, the LR receiving module 230 may be implemented with an RF frontend, a digital signal processing and power management unit and the like included in an RFIC chip which is an implementation of the RFIC 220. In that case, when the processor 210 determines to operate in the MR receiving mode which is a normal receiving mode, the LR receiving module 230 included in the RFIC 220 may not operate. Further, when the processor 210 determines to operate in the LR receiving mode which is a low power receiving mode, the LR receiving module 230 included in the RFIC 220 may receive a low power signal.

In an example embodiment, when the processor 210 determines to operate in the LR receiving mode which is a low power receiving mode, the processor 210 may provide an instruction to the MR receiver 240 to deactivate an operation. In that case, the processor 210 may provide information or an instruction to the RFIC 220 to operate in the LR receiving mode, and the LR receiving module 230 in the RFIC 220 may obtain information or an instruction to operate in the LR receiving mode, in order for the transceiver 200 to operate as an LR receiver.

Accordingly, the transceiver 200 according to an example embodiment may deactivate an operation of the MR receiver 240 in the LR receiving mode, and may receive a low power signal only with an operation of the RFIC 220 in order for an entire power consumption to be reduced due to a reduced power consumption of the MR receiver 240.

In an example embodiment, the processor 210 may control transmission of a signal for controlling the RFIC 220 and a signal for controlling the LR receiving module 230 to the RFIC 220. More particularly, the processor 210 may provide the signal for controlling the LR receiving module 230 to the LR receiving module 230 by the RFIC 220. For instance, when the processor 210 has determined that an event for operating in the LR receiving mode is triggered, the processor 210 may provide a signal for an operation of the LR receiving module 230 to the LR receiving module 230 by the RFIC 220.

In an example embodiment, the RFIC 220 may report both information obtained by the RFIC 220 and information obtained by the LR receiving module 230 to the processor 210. More particularly, information obtained by the LR receiving module 230 may be reported to the processor 210 by the RFIC 220. For instance, when a signal for switching to the MR receiving mode from the LR receiving mode is obtained by the LR receiving module 230, the LR receiving module 230 may report the signal for switching to the MR receiving mode to the processor 210 by the RFIC 220.

FIG. 3 illustrates a block diagram that embodies an LR receiving module by using a partial function of an MR receiver according to an example embodiment. When an element described in FIG. 1 or FIG. 2 is implemented or operates with an identical or similar operation also in FIG. 3, duplicate description is not provided in detail. An element of FIG. 3 may perform an operation corresponding to an element described in FIG. 1 and FIG. 2, but a specific implementation method or reproduction method thereof may be performed to be adequate to a configuration of FIG. 3.

Referring to FIG. 3, a transceiver 300 according to an example embodiment includes a processor 310, an RFIC 320 and an MR receiver (i.e., MR receiving circuit) 340. However, a configuration included in the transceiver 300 of FIG. 3 is provided as an example, and the transceiver 300 may further include another configuration. For example, the transceiver 300 may further include an element such as an RF frontend, a baseband processor, an ADC/DAC, and a PLL. The same is not limited thereto.

In an example embodiment, an LR receiving module (i.e., LR receiving circuit) 330 may be implemented within the MR receiver 340. More particularly, the MR receiver 340 may include a plurality of modules that perform various functions to perform an operation of the MR receiver 340, and the LR receiving module 330 may be implemented using at least one module among a plurality of modules.

For instance, an RF frontend, part of a digital signal processing block and the like of the MR receiver 340 may operate as the LR receiving module 330, and, in the LR receiving mode, at least one module operating as the LR receiving module 330 may operate, and remaining modules among the plurality of modules of the MR receiver 340 may have an operation thereof deactivated. In this regard, the plurality of modules of the MR receiver 340 may be optimized in order for only the LR receiving module 330 to operate in order to detect and process only an LP WUS or a synchronization signal (LP SS). This allows the transceiver 300 to implement the LR receiving mode by utilizing existing resources of the MR receiver 340 without implementation of additional hardware, and allows power consumption in the DRX mode to be minimized.

In an example embodiment, when the processor 310 determines to operate in the LR receiving mode which is a low power receiving mode, a low power signal may be received using the LR receiving module 330 included in the MR receiver 340. In that case, the MR receiver 340 may obtain information related to an instruction for switching to a low power mode or a low power mode operation from the processor 310.

In an example embodiment, when the processor 310 determines to operate in the MR receiving mode from the LR receiving mode which is a low power receiving mode, an operation of another module other than at least one module that implements the LR receiving module 330 at the MR receiver 340 may be turned on. Accordingly, the transceiver 300 may switch from the LR receiving mode to the MR receiving mode.

Accordingly, the transceiver 300 according to an example embodiment may deactivate a module operation of MR receiver 340, except for at least one module that performs the operation of the LR receiving module 330 in the LR receiving mode, and a low power signal may be received only by the operation of the LR receiving module 330, in order for an entire power consumption to be reduced because part of a module of the MR receiver 340 does not operate.

In an example embodiment, the processor 310 may control transmission of a signal for controlling the MR receiver 340 and a signal for controlling the LR receiving module 330 to the MR receiver 340. More particularly, the processor 310 may provide a signal for controlling the LR receiving module 330 to the LR receiving module 330 through the MR receiver 340. For instance, when the processor 310 determines that an event for operating in the LR receiving mode is triggered, the processor 310 may provide a signal for an operation of the LR receiving module 330 to the LR receiving module 330 through the MR receiver 340.

In an example embodiment, the MR receiver 340 may report to the processor 310 both information obtained by the MR receiver 340 and information obtained by the LR receiving module 330. More particularly, the information obtained by the LR receiving module 330 may be reported to the processor 310 through the MR receiver 340. For instance, when the LR receiving module 330 obtains a signal for switching to the MR receiving mode from the LR receiving mode, the LR receiving module 330 may report to the processor 310 the signal for switching to the MR receiving mode through the MR receiver 340.

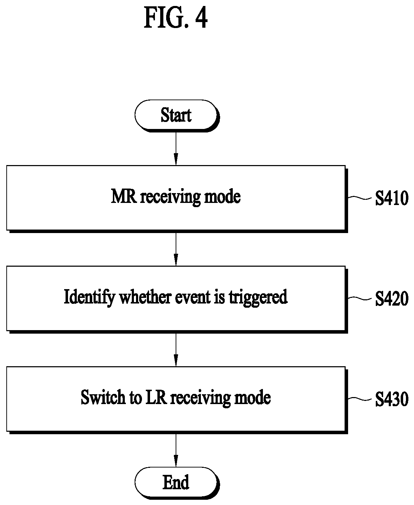

FIG. 4 is a flowchart illustrating a method for switching to the LR receiving mode according to an example embodiment.

Referring to FIG. 4, a transceiver (i.e., the transceiver 100, the transceiver 200 or the transceiver 300) according to an example embodiment in S410 may operate in the MR receiving mode. For instance, the transceiver may receive a signal using an MR receiver (i.e., the MR receiver 140, the MR receiver 240 or the MR receiver 340).

In S420, the transceiver according to an example embodiment may determine whether an event is triggered. The event may indicate that the transceiver can switch to an LR receive mode. Prior to this, the transceiver may obtain information about the event of LR receiving mode conversion to determine whether the event is triggered. For instance, the information about the event may be at least one of information indicating entry time of the DRX mode or information indicating a signal quality measurement value.

In S430, the transceiver according to an example embodiment may switch to the LR receiving mode. For instance, when the transceiver has identified that an event is triggered, the transceiver may switch to the LR receiving mode. Here, the LR receiving mode may represent a receiving mode for receiving a low power signal such as an LP WUS or an LP SS in the MR receiving mode for signal transmission and reception in a general LTE and NR communication. To switch to the LR receiving mode, the transceiver may deactivate at least one function of the MR receiver 140, and receive a low power signal by an operation of an LR receiving module (i.e., the LR receiving module 130, the LR receiving module 230, or the LR receiving module 330) to reduce power consumption. For instance, the transceiver 100 of FIG. 1 may deactivate a function of the MR receiver 140 to consume minimal standby power of the MR receiver 140. The transceiver 200 of FIG. 2 may deactivate a function of the MR receiver 240 to consume minimal standby power of the MR receiver 240. The transceiver 300 of FIG. 3 may deactivate part of a function of the MR receiver 340 to reduce power consumption.

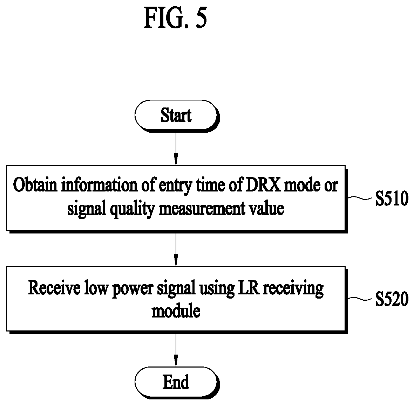

FIG. 5 is a flowchart illustrating a method of receiving a low power signal using an LR receiving module by obtaining information related to low power conversion according to an example embodiment.

Referring to FIG. 5, in S510, the transceiver (i.e., the transceiver 100, the transceiver 200 or the transceiver 300) according to an example embodiment may obtain information indicating entry time of the DRX mode or a signal quality measurement value. For instance, in order for the transceiver to operate in the LR receiving mode using an LR receiving module (i.e., the LR receiving module 130, the LR receiving module 230 or the LR receiving module 330), the processor (i.e., the processor 110, the processor 210 or the processor 310) may obtain information indicating entry time of the DRX mode or a signal quality measurement value. Further, based on the information indicating the entry time of the DRX mode or the signal quality measurement value which is obtained, the transceiver may determine whether the LR receiving mode is triggered.

In an example embodiment, information indicating entry time of the DRX mode may be set by using a value stored in advance by a related communication standard or setting of the transceiver, and may be received from an upper network. For instance, the transceiver may determine whether a predetermined period of time has elapsed from the entry time of the DRX mode, and, when the predetermined period of time has elapsed from the entry time of the DRX mode, determine that an event is triggered.

Further, the information indicating the signal quality measurement value may represent a measured value corresponding to a quality of a signal received in the MR receiving mode. In this case, the signal received in the MR receiving mode may be one of an LP SS, an NR PSS or an NR SSS, and the quality of the signal may be at least one of RSRP, RSRQ, SINR, a correlation value and a gain index value of the LP SS, the NR PSS or the NR SSS.

In S520, the transceiver according to an example embodiment may receive a low power signal using an LR receiving module. For instance, based on whether an event is triggered, the transceiver may receive a low power signal using an LR module.

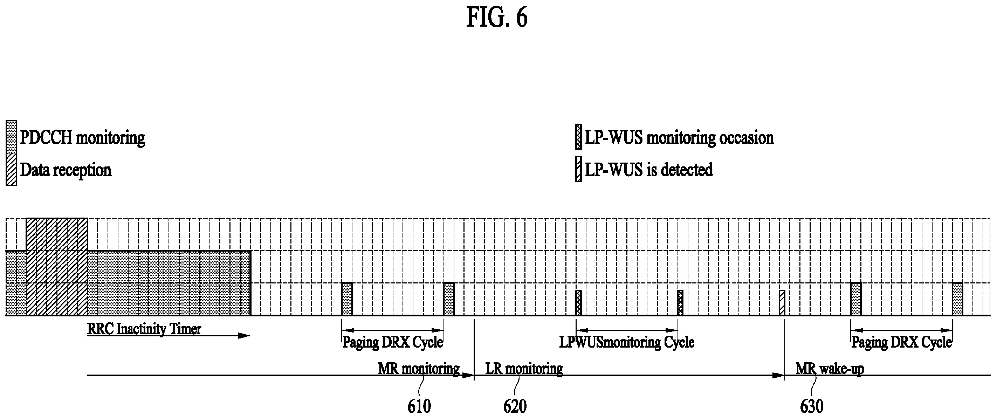

FIG. 6 is a graph that illustrates a process in which a transceiver according to an example embodiment receives a signal and receives a low power signal using an LR receiving module according to the DRX cycle in a time sequence. In the graph, a horizontal axis corresponds to a time axis, and a vertical axis is an axis for describing an event of data reception.

Referring to FIG. 6, based on a step of the time axis, an operation performed by a transceiver (i.e., the transceiver 100, the transceiver 200 or the transceiver 300) may include, according to a section, MR monitoring 610, LR monitoring 620 and MR wake-up 630.

In a section of the MR monitoring 610, the transceiver may perform PDCCH monitoring, and perform data reception. For instance, the transceiver may perform the PDCCH monitoring, and may perform data reception at a particular point of time. This section illustrates a section in which the transceiver operates in an active mode to transmit and receive data. At the same time, a timer (RRC inactivity timer) for switching the transceiver (e.g. the transceiver 100, the transceiver 200 or the transceiver 300) to an inactive mode may operate, and the transceiver may switch to the DRX mode when the timer expires.

In the DRX mode according to an example embodiment, the transceiver may monitor a paging signal for a particular cycle (e.g. a particular period) to conserve energy. For instance, in the DRX mode, the transceiver may monitor a paging signal by the MR monitoring. Here, the MR monitoring may show a process of monitoring a PDCCH signal to identify paging information in a state of a high power consumption of the transceiver. Here, the paging signal may be intermittently monitored during a paging DRX cycle (e.g. a paging DRX period) by the transceiver. Because the paging signal is not received during the paging DRX cycle, the transceiver may enter the LR monitoring 620 for receiving a low power signal.

A paging signal may be a signal indicating that a MR connection is required (e.g. a signal providing an alert of incoming data, service request(s) or system notification(s)). When the transceiver according to an example embodiment receives a PDCCH or a physical downlink shared channel (PDSCH), which are paging signals, during the paging DRX cycle, the transceiver may not enter the LR receiving mode. In this regard, when a paging signal is received, the transceiver may receive or transmit data by using an MR receiver (i.e., the MR receiver 140, the MR receiver 240 or the MR receiver 340).

In an example embodiment, when the transceiver identifies that a paging signal does not exist, and when a predetermined period of time has elapsed from entry time of the DRX mode, the transceiver may enter the LR receiving mode for receiving a low power signal using an LR receiving module (i.e., the LR receiving module 130, the LR receiving module 230 or the LR receiving module 330). In this regard, in order to minimize power consumption and efficiently maintain connection with a network, the transceiver may switch to a mode of the LR monitoring 620 from the LR receiving mode. In the section of the LR monitoring 620, the transceiver may maintain a low power mode, and may intermittently perform a monitoring process to detect an LP WUS (e.g. periodically, based on an LP WUS monitoring cycle (e.g. an LP WUS monitoring period)).

In an example embodiment, the transceiver may monitor an LP WUS by an LP WUS monitoring occasion. When the transceiver detects an LP WUS at the LP WUS monitoring occasion, the transceiver may switch an operating mode based on the detected LP WUS.

In an example embodiment, when an LP WUS is detected, the transceiver may switch again from the LR receiving mode to the MR receiving mode to be prepared for receiving paging data. For instance, after detecting an LP WUS, the transceiver may be prepared for receiving paging data at a section of the MR wake-up 630. The transceiver may perform the MR monitoring according to the paging DRX cycle at a section of the MR wake-up. In that case, the transceiver may wake up the MR receiver to operate, and may receive a paging signal using the MR receiver.

For instance, when the transceiver has detected a paging signal, the transceiver may receive required data again. In this regard, the transceiver may be switched again to the normal MR receiving mode from the low power mode.

Accordingly, in order to maintain power efficiency in the DRX mode and process paging data, the transceiver may perform the MR monitoring 610 and the LR monitoring 620 step by step and/or switch an operation.

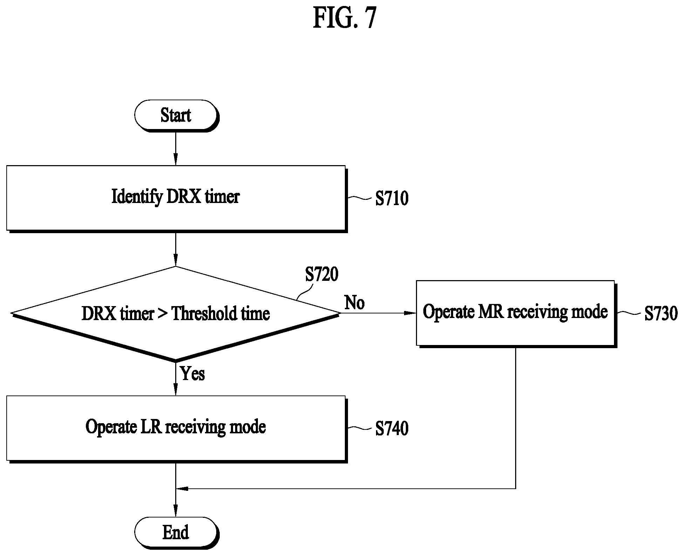

FIG. 7 is a flowchart illustrating a method of receiving a low power signal using an LR receiving module based on a DRX timer according to an example embodiment.

Referring to FIG. 7, in S710, a transceiver (i.e., the transceiver 100, the transceiver 200 or the transceiver 300) according to an example embodiment may identify a DRX timer. More specifically, the transceiver may enter the DRX mode, and identify entry time of the DRX mode and the DRX timer.

Here, the DRX timer may be used as a reference value to determine whether a user terminal is activated based on a DRX cycle in an idle mode, or whether the idle mode may be maintained. The transceiver may identify a DRX timer value to determine an operating mode according to a predetermined condition.

In S720, the transceiver according to an example embodiment may determine whether a DRX timer is equal to or greater than a predetermined threshold time. For instance, the transceiver may identify entry time of the DRX mode and a DRX timer, and may determine whether the transceiver has entered the DRX mode and whether a predetermined period of time has elapsed from the entry time of the DRX mode from the DRX timer to determine whether the DRX timer is equal to or greater than a predetermined threshold time. Here, the predetermined period of time may be set using a value stored in advance by a standard document or setting of the transceiver, or may be received from an upper network.

In an example embodiment, the transceiver may determine whether a DRX timer is equal to or greater than a predetermined threshold time, to determine whether to operate in the LR receiving mode for receiving a low power signal or in the MR receiving mode for receiving a normal signal. Here, the LR receiving mode may represent a mode that deactivates at least one function of an MR receiver (i.e., the MR receiver 140, the MR receiver 240 or the MR receiver 340) which receives a normal signal to receive an LP WUS which is a low power signal, and receives a low power signal using an LR receiving module (i.e., the LR receiving module 130, the LR receiving module 230 or the LR receiving module 330).

When the transceiver has determined that the DRX timer is less than the predetermined threshold time ("No" in S720), in S730, the transceiver may operate in the MR receiving mode. In that case, the transceiver may receive a signal using the MR receiver which still receives a normal signal.

In the MR receiving mode, the transceiver may monitor PDCCH and PDSCH signals, and may process a paging signal or data reception if necessary. Although the MR receiving mode consumes a relatively high power, the MR receiving mode may provide a function required for receiving data and maintaining synchronization with a network.

In an example embodiment, the transceiver may identify entry to the DRX mode again while operating in the MR receiving mode, and may compare a DRX timer to a threshold time to determine whether to operate in the LR receiving mode.

When re-entry into the DRX mode from the MR receiving mode, the DRX timer is restarted from the new DRX entry time. During the DRX mode, detection of control information that starts or restarts a drx-InactivityTimer (e.g., DCI on a PDCCH) or payload activity causes the processor to pause or reset the DRX timer and maintain the MR receiving mode; entry into the LR receiving mode occurs after the threshold time elapses without detection of control information or payload activity.

When the transceiver has determined that the DRX timer is equal to or greater than the predetermined threshold time ("Yes" in S720), in S740, the transceiver according to an example embodiment may operate in the LR receiving mode. In that case, in order to operate in the LR receiving mode, the transceiver may receive a low power signal using the LR receiving module.

When the transceiver according to an example embodiment operates in the LR receiving mode, an operation of an RFIC (i.e., the RFIC 120, the RFIC 220 or the RFIC 320), an LR receiving module (i.e., the LR receiving module 130, the LR receiving module 230 or the LR receiving module 330) and an MR receiver (i.e., the MR receiver 140, the MR receiver 240 or the MR receiver 340), and information exchanged with a processor (i.e., the processor 110, the processor 210 or the processor 310) may differ.

For instance, when the LR receiving module 130 is implemented as a device separate from the RFIC 120 and the MR receiver 140 as in FIG. 1, in order to operate in the LR receiving mode, the RFIC 120 may perform an operation for LR reception, the MR receiver 140 may be controlled not to operate, and the LR receiving module 130 may operate to receive a low power signal.

Further, when the LR receiving module 230 is implemented in the RFIC 220 as in FIG. 2, the LR receiving mode may be implemented by controlling in order for the LR receiving module 230 to operate, and in order for the MR receiver 240 not to operate. In that case, without having to additionally implement the LR receiving module 230, implementation may be performed with the RFIC 220, in order for an area for implementing the LR receiving module 230 to be reduced, and in order for an operation of the MR receiver 240 to be deactivated or operate at a level of using standby power for switching to the MR receiving mode, thereby reducing power consumption.

Further, when the LR receiving module 330 is implemented in the MR receiver 340 as in FIG. 3, the LR receiving mode may be implemented by controlling in order for the LR receiving module 330 to operate, and in order for the MR receiver 340 not to operate.

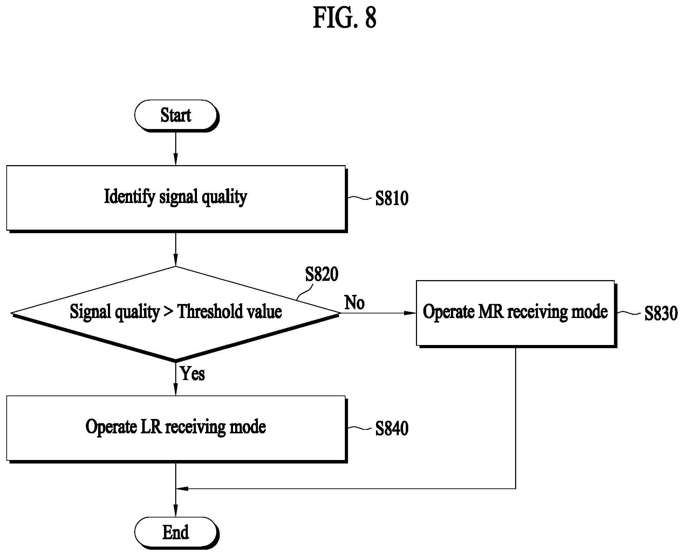

FIG. 8 is a flowchart illustrating a method of receiving a low power signal using an LR receiving module based on signal quality according to an example embodiment.

Referring to FIG. 8, in S810, a transceiver (i.e., the transceiver 100, the transceiver 200 or the transceiver 300) according to an example embodiment may identify signal quality. More specifically, before S810, the transceiver may receive a signal to determine whether to switch to the LR receiving mode from the MR receiving mode. For instance, the signal to determine whether to switch to the LR receiving mode may be one of an LP SS, an NR PSS or an NR SSS, and quality of the signal may be at least one of RSRP, RSRQ, SINR, a correlation value and a gain index value of the LP SS, the NR PSS or the NR SSS.

In S820, the transceiver according to an example embodiment may determine whether a value of signal quality is equal to or greater than a predetermined threshold value. For instance, the transceiver may receive an NR PSS, and determine whether each of RSRP and SINR of the NR PSS is equal to or greater than a predetermined value, in order to determine whether to operate in the MR receiving mode or to operate in the LR receiving mode.

When the transceiver has determined that the value of the signal quality is less than the predetermined threshold value ("No" in S820), in S830, the transceiver may operate in the MR receiving mode. In that case, the transceiver may receive a signal using an MR receiver (i.e., the MR receiver 140, the MR receiver 240 or the MR receiver 340) which still receives a normal signal.

When the transceiver has determined that the value of the signal quality is equal to or greater than the predetermined threshold value ("Yes" in S820), in S840, the transceiver may operate in the LR receiving mode. In that case, the transceiver may, in order to operate in the LR receiving mode, receive a low power signal using an LR receiving module (i.e., the LR receiving module 130, the LR receiving module 230 or the LR receiving module 330).

When the transceiver according to an example embodiment determines to operate in the LR receiving mode, according to an implementation method of the transceiver, an operation of an RFIC (i.e., the RFIC 120, the RFIC 220 or the RFIC 320), an LR receiving module (i.e., the LR receiving module 130, the LR receiving module 230 or the LR receiving module 330) and an MR receiver (i.e., the MR receiver 140, the MR receiver 240 or the MR receiver 340), and information exchanged with a processor (i.e., the processor 110, the processor 120, or the processor 320) may differ.

For instance, when the LR receiving module 130 is implemented as a device separate from the RFIC 120 and the MR receiver 140 as in FIG. 1, in order to operate in the LR receiving mode, the RFIC 120 may perform an operation for LR reception, the MR receiver 140 may be controlled not to operate, and the LR receiving module 130 may operate to receive a low power signal.

Further, as in FIG. 2, when the LR receiving module 230 is implemented in the RFIC 220, the LR receiving mode may be implemented by controlling in order for the LR receiving module 230 to operate, and in order for the MR receiver 240 not to operate. In that case, without having to additionally implement the LR receiving module 230, implementation may be performed with the RFIC 220, in order for the area for implementing the LR receiving module 230 to be reduced, and in order for an operation of the MR receiver 240 to be deactivated or operate at a level of using standby power for switching to the MR receiving mode, thereby reducing power consumption.

Further, when the LR receiving module 330 is implemented in the MR receiver 340 as in FIG. 3, the LR receiving mode may be implemented by controlling in order for the LR receiving module 330 to operate, and in order for part of a function of the MR receiver 340 to be deactivated.

The transceiver according to an example embodiment may identify a DRX timer and a signal quality, and, when the DRX timer is equal to or greater than a predetermined threshold value, and when the signal quality is equal to or greater than a predetermined threshold value (i.e., when all conditions of S720 and S820 of FIG. 7 and FIG. 8 are satisfied), operate in the LR receiving mode. If both conditions are not satisfied (e.g. if at least one of the conditions is not satisfied), then the transceiver may operate in the MR receiving mode.

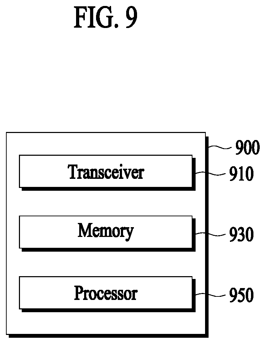

FIG. 9 is a block diagram that illustrates a user terminal according to an example embodiment.

Referring to FIG. 9, according to an example embodiment, a user terminal 900 includes a transceiver 910, a memory 920 and a processor 930. As for the user terminal 900 illustrated in FIG. 9, only some elements are illustrated. It will be understood by those of ordinary skill in the art to which the present disclosure pertains that other elements may be further included in the user terminal 900.

The transceiver 910 is a device to perform wired/wireless communication, and may communicate with an external electronic device. The external electronic device may be a user terminal or a server. Further, a communication technology used by the transceiver 910 may include global system for mobile communication (GSM), code division multi access (CDMA), long term evolution (LTE), 5G, wireless LAN (WLAN), wireless-fidelity (Wi-Fi), Bluetooth, radio frequency identification (RFID), infrared data association (IrDA), ZigBee, near field communication (NFC) and the like.

The transceiver 910 according to an example embodiment may be referred to as a modem, and may support various wireless communication standards such as LTE, 5G or Wi-Fi. Further, the transceiver 910 may be used in various mobile communication devices and IoT devices.

Further, the transceiver 910 in FIG. 9 may include an identical configuration to the transceiver 100, the transceiver 200 or the transceiver 300 of FIG. 1, FIG. 2 and FIG. 3, and may perform an identical function.

The transceiver 910 may obtain information about an event of LR reception mode conversion by an RFIC or an MR receiver, determine whether the event is triggered based on the information about the event, and, when the event is triggered, receive a low power signal using an LR receiving module.

The processor 930 may control an overall operation of the user terminal 900 and process data and a signal. The processor 930 may be configured as at least one hardware unit. Further, the processor 930 may operate according to at least one software module generated by executing a program code stored in the memory 920. Because the processor 930 may include a memory, the processor 930 may operate according to a program code stored in the memory to control an overall operation of the user terminal 900 and process data and a signal.

According to example embodiments, the user terminal 900, a processor, a memory configured to store and perform program data, a permanent storage such as a disc drive, a communication port communicating with an external device, a touch panel, a key, a user interface device such as an icon and the like may be included. Methods implemented using a software module or an algorithm may be stored on a computer-readable recording medium as computer-readable codes or program instructions which may be performed on the processor. Here, the computer-readable recording medium includes a magnetic storage medium (for instance, a read-only memory (ROM), a random-access memory (RAM), a floppy disc, a hard disc and the like), an optical reading medium (for instance, a CD-ROM, and a digital versatile disc (DVD)) and the like. The computer-readable recording medium may be distributed to computer systems connected by a network, in order for a computer-readable code to be stored and performed in a distribution method. The medium may be computer-readable, stored in the memory, and performed at the processor.

Some aspects may be illustrated as functional block configurations and various processing operations. These functional blocks may be implemented as various numbers of hardware or/and hardware operating according to software configurations to perform particular functions. For instance, an example embodiment may adopt direct circuit configurations such as a memory, processing, logic, a look-up table and the like which may perform various functions by control of at least one micro-processor or other control devices. Similar to elements being able to be performed as software programming or software elements, example embodiments may include various algorithms implemented by combinations of data structures, processes, routines or other programming configurations, to be implemented as a programming or scripting language such as C, C++, Java, an assembler, Python and the like. Functional aspects may be implemented by an algorithm performed by at least one processor. The terms such as "mechanism," "element," "means," and "configuration" may be widely used, and are not limited to mechanical and physical configurations. The terms may include a meaning of a series of routines of software by being linked to a processor and the like.

While aspects of example embodiments have been particularly shown and described, it will be understood that various changes in form and details may be made therein without departing from the scope of the following claims.

## Claims

1. A transceiver for a wireless communication system, the transceiver comprising:
a radio frequency integrated circuit, RFIC, (120) configured to transmit and receive a signal;
a main radio, MR, receiver (140) configured to obtain a digital signal from the RFIC; and
a processor (110) configured to:
control the RFIC (120) and the MR receiver (140);
identify information on an event for switching to a low power radio, LR, receiving mode;
determine whether the event is triggered based on the information on the event; and
in case that the event is triggered, process a low power signal using an LR receiving module (130).

2. The transceiver of claim 1, wherein the RFIC (120) comprises the LR receiving module (130).

3. The transceiver of claim 2, wherein the processor (110) is configured to, in case that the event is triggered, deactivate the MR receiver (140).

4. The transceiver of claim 1, wherein the MR receiver (140) comprises the LR receiving module (130).

5. The transceiver of claim 4, wherein the MR receiver (140) is configured to, in case that the event is triggered, deactivate at least one of functions of the MR receiver (140).

6. The transceiver of any of claims 1-3, wherein the processor (110) is configured to:
in case that the event is triggered, provide first control information for an operation of an LR receiving mode to the LR receiving module (130); and
provide second control information to deactivate the MR receiver (140).

7. The transceiver of any preceding claim, wherein the information on the event comprises at least one of entry time of a discontinuous reception, DRX, mode or a signal quality measurement value.

8. The transceiver of claim 7, wherein the processor (110) is configured to, in case that the signal quality measurement value is equal to or greater than a threshold value, determine that the event is triggered.

9. The transceiver of claim 7 or claim 8, wherein the transceiver is configured to receive at least one of a low power synchronization signal, LP SS, a new radio primary synchronization signal, NR PSS, or a new radio secondary synchronization signal, NR SSS, and
wherein the signal quality measurement value is a measured value corresponding to at least one of a quality of the LP SS, the NR PSS or the NR SSS.

10. The transceiver of claim 9, wherein the signal quality measurement value is at least one of reference signal received power, RSRP, reference signal received quality, RSRQ, signal to interference plus noise ratio, SINR, a correlation value and a gain index value of the LP SS, the NR PSS or the NR SSS.

11. The transceiver of any of claims 7-10, wherein the processor (110) is configured to:
determine whether a predetermined period of time is elapsed from the entry time of the DRX mode; and
in case that the predetermined period of time is elapsed from the entry time of the DRX mode, determine that the event is triggered.

12. The transceiver of claim 7-11, wherein the processor (110) is configured to,
in case that the predetermined period of time is elapsed from the entry time of the DRX mode and the signal quality measurement value is equal to or greater than the predetermined value, determine that the event is triggered.

13. The transceiver of any preceding claim, wherein the LR receiving module (130) is configured to monitor a low power wake-up signal, LP WUS, and
wherein the processor (110) is configured to, in case that the LR receiving module (130) receives the LP WUS, receive a signal from the MR receiver (140).

14. A method of operating a transceiver comprising an RFIC (120) and an MR receiver (140) for a wireless communication system, the method comprising:
identifying information on an event for switching to an LR receiving mode;
determining whether the event is triggered based on the information on the event; and
in case that the event is triggered, processing a low power signal using an LR receiving module (130).

15. A user terminal for a wireless communication system, the user terminal comprising a transceiver according to any of claims 1-13.
